Europäisches Patentamt

European Patent Office

Office européen des brevets

(11) Numéro de publication: **0 228 967**
**A1**

(12) **DEMANDE DE BREVET EUROPEEN**

(21) Numéro de dépôt: **86402923.6**

(22) Date de dépôt: **23.12.86**

(51) Int. Cl.⁴: **F 16 F 13/00**

(30) Priorité: **24.12.85 FR 8519160**

(43) Date de publication de la demande:
**15.07.87 Bulletin 87/29**

(84) Etats contractants désignés: **DE ES GB IT NL**

(71) Demandeur: **HUTCHINSON**
**2 rue Balzac**
**F-75008 Paris (FR)**

(72) Inventeur: **Hourlier, Francois**
**2, rue des Minières St Denis Les Ponts**
**F-28200 Chateaudun (FR)**

(74) Mandataire: **Behaghel, Pierre et al**
**CABINET PLASSERAUD 84 rue d'Amsterdam**
**F-75009 Paris (FR)**

(54) **Perfectionnements aux supports antivibratoires hydrauliques.**

(57) Dans un support antivibratoire hydraulique destiné à être interposé entre deux éléments rigides (1 et 3) et comportant une chambre de travail (A) et une chambre de compensation (B) séparées par une cloison (10) et reliées en permanence entre elles par un passage étranglé (11), l'ensemble de ces chambres et de ce passage étant rempli de liquide, la chambre de travail est délimitée extérieurement par une paroi annulaire de support (7) présentant la forme générale de deux troncs de cône creux et épais de sens inverses (7₁ et 7₂) juxtaposés axialement par leurs grandes bases, leurs deux petites bases étant raccordées respectivement aux deux éléments rigides.

EP 0 228 967 A1

**Description**

Perfectionnements aux supports antivibratoires hydrauliques.

L'invention concerne les dispositifs antivibratoires destinés à être interposés aux fins de support et d'amortissement entre deux éléments rigides individuellement soumis à certaines oscillations et/ou vibrations, l'amortissement faisant intervenir la mise en résonance d'une masse de liquide placée dans un passage étranglé.

A titre d'exemple non limitatif, on indique que de tels supports peuvent être montés entre un châssis de véhicule et le moteur de ce véhicule en vue d'amortir aussi bien les oscillations imposées au châssis par les irrégularités et variations de déclivité du sol lors de la circulation du véhicule sur ce sol que les vibrations dues au fonctionnement du moteur.

L'invention concerne plus particulièrement, parmi les supports du genre en question, ceux qui sont constitués par un boîtier étanche interposé entre les deux éléments rigides, boîtier comportant une embase rigide solidarisable avec l'un des deux éléments rigides, un anneau rigide solidarisable avec l'autre élément rigide, une paroi élastique annulaire de support reliant de manière étanche l'embase à l'anneau et une membrane flexible raccordée de manière étanche à l'anneau, l'intérieur de ce boîtier étant divisé, par une cloison étanche raccordée à l'anneau entre la paroi annulaire et la membrane, en deux chambres, savoir une chambre de travail du côté de la paroi annulaire et une chambre de compensation du côté de la membrane, ces deux chambres communiquant entre elles en permanence par le passage étranglé ci-dessus, lequel est avantageusement constitué par un canal incurvé situé dans la zone de raccordement entre la paroi annulaire et l'anneau, et une masse liquide remplissant les deux chambres ainsi que le passage étranglé.

Avec un tel support, les oscillations ou vibrations créées entre les deux éléments rigides ont pour effet de rapprocher et d'écarter axialement à tour de rôle ces deux éléments l'un de l'autre.

Celles, de ces oscillations, qui présentent une fréquence relativement basse (inférieure à 20 Hz) et une amplitude relativement élevée (supérieure à 0,5 mm), ont pour effet de refouler le liquide de l'une des deux chambres dans l'autre à travers le passage étranglé et inversement, ce qui assure un amortissement élevé de certaines de ces oscillations par mise en résonance de la masse de liquide circulant dans ledit passage, les cotes de ce dernier étant choisies en conséquence.

Les supports définis ci-dessus, à chambre de travail unique, ne doivent pas être confondus avec les supports comprenant deux chambres de travail et aucune chambre de compensation, pour lesquels les extrémités opposées des deux chambres de travail sont solidarisées entre elles par un boulon central qui traverse l'ensemble de ces deux chambres : les oscillations et vibrations susceptibles d'être correctement amorties avec de tels supports "à deux chambres" sont généralement moins variées qu'avec les supports "à chambre unique".

Dans les modes de réalisation connus des supports à chambre unique du genre en question, la paroi élastique annulaire de support définissant cette chambre présente généralement la forme d'un tronc de cône creux et épais en ce sens qu'elle est délimitée intérieurement et extérieurement par deux surfaces d'allure tronconique sensiblement parallèles, la grande base de ladite paroi tronconique étant raccordée à l'anneau rigide et sa petite base, à l'embase rigide.

Les supports correspondants donnent souvent satisfaction, mais les courses de leurs déformations élastiques sont limitées dans toutes les directions, c'est-à-dire aussi bien selon la direction axiale du support que selon les directions transversales, ce qui entraîne pour ledit support des raideurs minima relativement élevées.

L'invention a pour but, surtout, d'écarter ces inconvénients en permettant de conférer aux supports considérés de grandes courses de déformation élastique et des raideurs faibles.

A cet effet les supports du genre en question selon l'invention sont essentiellement caractérisés en ce que leur paroi annulaire de support présente la forme générale de deux troncs de cône creux et épais de sens inverses juxtaposés axialement par leurs grandes bases, les deux petites bases de ces troncs de cône étant raccordées respectivement à l'embase rigide et à l'anneau rigide.

Une construction de ce genre a déjà été proposée pour la paroi annulaire élastique de support comprise par un support à deux chambres. Mais dans ce cas ladite paroi de support est constituée par les deux moitiés d'un seul et même soufflet, moitiés dont une seulement travaille à la compression, l'autre travaillant à la traction : dans le cas de la présente invention, seule la résistance à la compression, conduisant à une construction relativement massive, est à considérer.

Dans des modes de réalisation avantageux, on a recours en outre à l'une et/ou à l'autre des dispositions suivantes :

- une armature rigide annulaire est adhérée sur la matière élastique constitutive de la paroi de support annulaire au niveau de sa zone renflée en laquelle se raccordent les deux grandes bases ci-dessus,
- la portion, de la face interne de la chambre de travail, délimitée par la paroi de support annulaire, présente une forme ellipsoïdale de révolution,
- d'une façon connue en soi, le passage étranglé se présente sous la forme d'un canal hélicoïdal,
- d'une façon connue en soi, la cloison étanche présente une portion centrale mobile ou déformable par flexion perpendiculairement à son plan moyen et les amplitudes de ses déplacements ou déformations sont limitées à une valeur relativement faible, c'est-à-dire de l'ordre de 0,5 mm.

L'invention comprend, mises à part ces dispositions principales, certaines autres dispositions qui s'utilisent de préférence en même temps et dont il sera plus explicitement question ci-après.

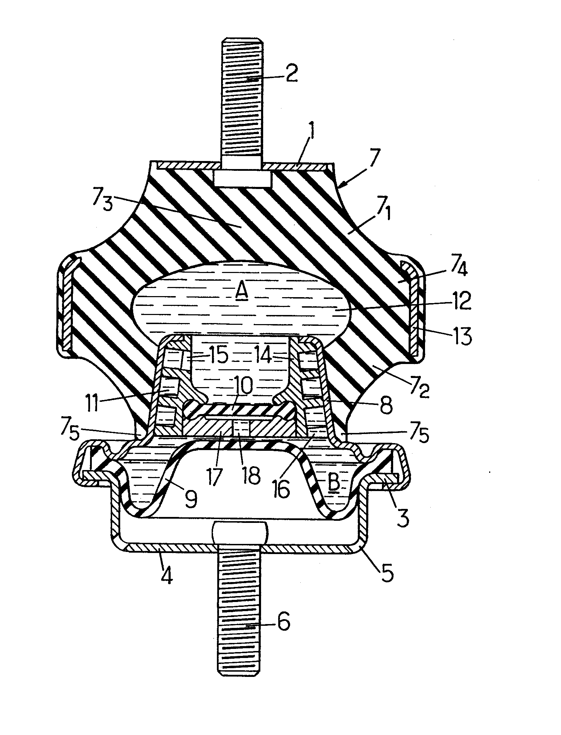

Dans ce qui suit, l'on va décrire un mode de réalisation préféré de l'invention en se référant au dessin ci-annexé d'une manière bien entendu non limitative.

La figure unique, de ce dessin, montre en coupe axiale un support hydraulique antivibratoire établi selon l'invention.

D'une façon connue en soi, le support considéré présente une forme générale de révolution autour d'un axe et comprend :

- une embase rigide 1 solidaire d'un goujon de fixation 2,
- un anneau rigide 3 constituant le bord d'une cuvette 4 perforée en 5 et traversée en son centre par un goujon de fixation soudé 6,
- une paroi annulaire élastique de support 7 dont les deux extrémités sont adhérées respectivement sur l'embase 1 et sur l'anneau 3 ou plus précisément sur une pièce annulaire 8 solidaire de cet anneau,
- une membrane flexible 9 dont le pourtour est raccordé de façon étanche à l'anneau 3,
- une cloison étanche 10 dont le pourtour est raccordé de façon étanche à l'anneau 3, cloison divisant le volume intérieur au boîtier étanche constitué par les éléments ci-dessus en deux chambres, savoir une chambre de travail A du côté de la paroi 7 et une chambre de compensation B du côté de la membrane 9,
- un passage étranglé 11 évidé dans la cloison 10 ou dans son pourtour, et
- une masse liquide 12 remplissant le boîtier étanche, y compris le passage 11.

C'est la paroi annulaire élastique de support 7 qui est plus particulièrement concernée par la présente invention.

Cette paroi 7, constituée par une pièce moulée en caoutchouc ou autre élastomère, présente ici la forme générale de deux troncs de cônes épais et creux $7_1$ et $7_2$ orientés selon des sens inverses et juxtaposés selon leurs grandes bases.

Ce sont les petites bases de ces deux troncs de cônes $7_1$ et $7_2$ qui sont raccordées de façon étanche, respectivement, à l'embase 1 et à l'anneau 3 : la petite base, du tronc de cône $7_1$, qui est raccordée à l'embase 1 est de préférence prolongée vers l'axe du support par un opercule $7_3$ venu de moulage avec la paroi et fermant cette petite base.

Les surfaces qui délimitent intérieurement et extérieurement chacun des deux troncs de cônes peuvent être tronconiques.

Mais elles peuvent également affecter des demi-sections axiales présentant des formes autres que celles de segments de droite.

C'est ainsi que, dans le mode de réalisation illustré, ces demi-sections axiales ont des formes courbes conférant à la surface intérieure de la chambre de travail A la forme générale d'un ellipsoïde de révolution alors que la demi-section axiale extérieure de chaque tronçon tronconique présente sensiblement la forme d'un quart de cercle creusé dans le caoutchouc et s'étendant depuis une première extrémité située au niveau de la petite base du tronc de cône concerné et orientée à peu près parallèlement à l'axe du support jusqu'à une seconde extrémité orientée radialement vers l'extérieur du support.

La portion renflée de la paroi 7 comprise axialement entre ces secondes extrémités forme un bourrelet $7_4$ relativement épais axialement et radialement, bourrelet qui est renforcé dans sa zone périphérique par une armature annulaire rigide 13 noyée dans la masse et destinée à éviter les déformations dudit bourrelet.

Les deux tronçons tronconiques $7_1$ et $7_2$ peuvent être moulés séparément puis rapportés l'un contre l'autre selon leurs grandes bases par collage et/ou post-vulcanisation.

Il peuvent également être moulés en une seule pièce, avec un noyau intérieur rigide, le démoulage étant rendu possible du fait de l'élasticité du caoutchouc, par écartement des lèvres $7_5$ délimitant la petite base du tronçon $7_2$.

Selon une variante intéressante, la paroi 7 est moulée d'un seul bloc et la pièce annulaire rigide 8 est adhérée à chaud sur cette paroi lors de son moulage, le noyau interne nécessaire pour former la chambre de travail A se présentant alors sous une forme expansible et rétractable en vue de son extraction et étant constitué notamment par un sac gonflable à l'aide d'un fluide sous pression, ainsi que connu dans la technique de fabrication des pneumatiques.

Comme la portion de paroi 7 qui est raccordée à l'anneau rigide 3 est constituée par les lèvres $7_5$ qui délimitent une petite base de la paroi doublement tronconique considérée et non plus une grande base d'une paroi tronconique simple comme dans les réalisations connues, on dispose ici de moins de place que dans ces réalisations connues pour placer le canal constituant le passage étranglé 11.

Au lieu donc d'étendre ce canal sur un arc de cercle unique de l'ordre de 270° disposé à la périphérie de la cloison 10, on l'étend ici sur plusieurs spires successives d'une hélice, laquelle présente avantageusement une forme légèrement tronconique convergeant en direction de l'embase 1.

Le canal hélicoïdal 11 ainsi défini est avantageusement délimité intérieurement --c'est-à-dire du côté de l'axe du support-- par une rainure hélicoïdale évidée dans la face latérale extérieure d'une paroi tubulaire épaisse 14 et extérieurement par une portion de la pièce 8 ci-dessus.

Les extrémités de ce canal 11 débouchent respectivement en 15 et 16 dans les deux chambres A et B.

La cloison étanche 10 pourrait être rigide.

Dans le mode de réalisation illustré, elle est constituée par une membrane déformable s'étendant perpendiculairement à l'axe du support et les amplitudes de ses déformations parallèles à cet axe sont limitées par sa butée contre une cloison rigide 17 perforée en 18.

Cette cloison rigide perforée 17 pourrait être dédoublée en ce sens qu'une seconde paroi perforée pourrait être prévue de l'autre côté de la membrane 10.

Comme bien connu, ladite membrane 10 permet d'amortir certaines vibrations de fréquence plus élevée et d'amplitude plus petite que celles amorties par mise en résonance du liquide contenu dans le canal 11.

En suite de quoi, et quel que soit le mode de réalisation adopté, on dispose finalement d'un support antivibratoire hydraulique dont la constitution résulte suffisamment de ce qui précède.

Le fonctionnement d'un tel support est semblable à ceux des supports connus : les oscillations et/ou vibrations imposées à l'embase rigide 1 par rapport à l'anneau rigide 3 ou inversement, se traduisent par des déformations de la paroi 7 doublement tronconique, lesquelles sont appliquées sur la masse liquide 16 et assurent des amortissements dûs à la mise en résonance de la portion de cette masse disposée dans le canal 11 et aux vibrations de la cloison 10 si celle-ci est prévue mobile ou déformable.

Un tel support permet en particulier d'amortir les vibrations et/ou oscillations transmises entre un châssis de véhicule sur lequel est vissé le goujon 6 et le moteur de ce véhicule vissé sur le goujon 2.

Les courses des déformations susceptibles d'être imposées sans dommage à la paroi 7 doublement tronconique sont ici particulièrement élevées du fait que les portions, de cette paroi, susceptibles de travailler sont pratiquement doublées par rapport à celles des supports connus à paroi tronconique simple, les deux tronçons $7_1$ et $7_2$ étant libres de se déformer.

Ce résultat est obtenu sans augmentation du diamètre hors tout du support, seule sa dimension axiale étant légèrement augmentée.

La raideur dudit support peut en être réduite d'autant, ce qui peut être très avantageux dans certains cas.

Comme il va de soi, et comme il résulte d'ailleurs déjà de ce qui précède, l'invention ne se limite nullement à ceux de ses modes d'application et de réalisation qui ont été plus spécialement envisagés ; elle en embrasse, au contraire, toutes les variantes, notamment :

- celles où la cloison étanche 10 divisant l'intérieur du boîtier en deux chambres A et B serait rigide et fixe et non pas déformable,
- celles où cette cloison étanche 10 présenterait une portion centrale rigide, mais mobile avec des débattements limités,
- celles où ladite cloison étanche 10 serait percée par au moins un trou reliant les deux chambres et constituant un second passage étranglé monté en parallèle sur le passage étranglé 11,
- celles où une portion de la face interne de la paroi 7 doublement tronconique serait constituée par un voile étanche déformable ou mobile à débattements limités raccordé de façon étanche au reste de la paroi, voile dont la face extérieure communiquerait avec l'air libre.

## Revendications

1. Support antivibratoire hydraulique destiné à être interposé entre deux éléments rigides individuellement soumis à certaines oscillations et/ou vibrations, et comportant un boîtier étanche interposé entre les deux éléments rigides, boîtier comportant une embase rigide (1) solidarisable avec l'un des deux éléments rigides, un anneau rigide (3) solidarisable avec l'autre élément rigide, une paroi élastique annulaire de support (7) reliant de manière étanche l'embase à l'anneau et une membrane flexible (9) raccordée de manière étanche à l'anneau, l'intérieur de ce boîtier étant divisé, par une cloison étanche (10) raccordée à l'anneau entre la paroi annulaire et la membrane, en deux chambres, savoir une chambre de travail (A) du côté de la paroi annulaire et une chambre de compensation (B) du côté de la membrane, ces deux chambres communiquant entre elles en permanence par un passage étranglé (11), et une masse liquide (16) remplissant les deux chambres ainsi que le passage étranglé, caractérisé en ce que sa paroi annulaire de support (7) présente la forme générale de deux troncs de cône creux et épais de sens inverses ($7_1$ et $7_2$) juxtaposés axialement par leurs grandes bases, les deux petites bases de ces troncs de cône étant raccordées respectivement à l'embase rigide (1) et à l'anneau rigide (3).

2. Support selon la revendication 1, caractérisé en ce qu'une armature rigide annulaire (13) est adhérée sur la matière élastique constitutive de la paroi de support annulaire (7) au niveau de sa zone renflée ($7_3$) en laquelle se raccordent les deux grandes bases des tronçons tronconiques ($7_1$ et $7_2$).

3. Support selon l'une quelconque des précédentes revendications, caractérisé en ce que la portion, de la face interne de la chambre de travail (A) délimitée par la paroi de support annulaire (7), présente une forme ellipsoïdale de révolution.

4. Support selon l'une quelconque des précédentes revendications, caractérisé en ce que le passage étranglé se présente sous la forme d'un canal hélicoïdal (11).

5. Support selon l'une quelconque des précédentes revendications, caractérisé en ce que la cloison étanche (10) présente une portion centrale mobile ou déformable par flexion perpendiculairement à son plan moyen et en ce que les amplitudes de ses déplacements ou déformations sont limitées à une valeur relativement faible, c'est-à-dire de l'ordre de 0,5 mm.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | EP-A-0 156 697 (HUTCHINSON)<br>* Page 4, ligne 15 - page 5, ligne 15; page 6, lignes 8-11; page 7, lignes 7-11 * | 1 | F 16 F  13/00 |
| A | | 4,5 | |
| | --- | | |
| Y | DE-U-7 817 348 (BOGE)<br>* Page 1, paragraphe 2 - page 2, paragraphe 1; figure * | 1 | |
| | --- | | |
| A | FR-A-2 435 632 (PAULSTRA)<br>* Pages 9,10, revendications 1-3,11-14; figures 1-3 * | 1,2 | |
| | --- | | |
| A | PATENT ABSTRACTS OF JAPAN, vol. 9, no. 55 (M-362)[1778], 9 mars 1985; & JP-A-59 190 531 (HONDA GIKEN KOGYO K.K.) 29-10-1984 | 1,2,5 | **DOMAINES TECHNIQUES RECHERCHES (Int. Cl.4)**<br><br>F 16 F<br>B 60 K |
| | --- | | |
| A | EP-A-0 132 404 (HONDA)<br>* Page 17, revendication 1; figures 1,3-5,8 * | 1,2,4 | |
| | --- | | |
| A | EP-A-0 165 095 (HUTCHINSON)<br><br>* Page 5, lignes 6-11; figure 1 * | 1,2,4, 5 | |
| | ---      -/- | | |

Le présent rapport de recherche a été établi pour toutes les revendications

| Lieu de la recherche | Date d'achèvement de la recherche | Examinateur |
|---|---|---|
| LA HAYE | 24-03-1987 | ESPEEL R.P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82

| Catégorie | Citation du document avec indication, en cas de besoin, des parties pertinentes | Revendication concernée | CLASSEMENT DE LA DEMANDE (Int. Cl.4) |
|---|---|---|---|
| A | PATENT ABSTRACTS OF JAPAN, vol. 9, no. 42 (M-359)[1765], 22 février 1985; & JP-A-59 183 136 (HINO JIDOSHA KOGYO K.K.) 18-10-1984 | 3 | |
| | --- | | |
| A | EP-A-0 005 730 (BOGE) | | |
| | --- | | |
| A | DE-A-3 414 547 (WOCO) | | |
| | --- | | |
| A | FR-A-2 472 116 (CONTINENTAL GUMMI) | | |
| | --- | | |
| A | DE-U-7 904 427 (BOGE) | | |
| | ----- | | DOMAINES TECHNIQUES RECHERCHES (Int. Cl.4) |

**DOCUMENTS CONSIDERES COMME PERTINENTS**

Page 2

Le présent rapport de recherche a été établi pour toutes les revendications

| Lieu de la recherche | Date d'achèvement de la recherche | Examinateur |
|---|---|---|
| LA HAYE | 24-03-1987 | ESPEEL R.P. |